(19) **Europäisches Patentamt / European Patent Office / Office européen des brevets**

(11) **EP 1 626 261 B1**

(12) **EUROPÄISCHE PATENTSCHRIFT**

(45) Veröffentlichungstag und Bekanntmachung des Hinweises auf die Patenterteilung:
**03.10.2007 Patentblatt 2007/40**

(51) Int Cl.:
***G01L 3/12*** *(2006.01)*

(21) Anmeldenummer: **05016746.9**

(22) Anmeldetag: **02.08.2005**

(54) **Vorrichtung und Verfahren zum Bestimmen von Drehmomenten an einer Turbinenwelle**

Apparatus and method for determining torques applied to turbine shafts

Appareil et procédé de détermination de couples appliqués aux arbres de turbine

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.08.2004 DE 102004039314**

(43) Veröffentlichungstag der Anmeldung:
**15.02.2006 Patentblatt 2006/07**

(73) Patentinhaber: **MTU Aero Engines GmbH**
**80995 München (DE)**

(72) Erfinder: **Zielinski, Michael, Dr.**
**85716 Unterschleissheim (DE)**

(56) Entgegenhaltungen:
**EP-A- 1 398 608          US-A- 4 811 238**

• **ZIELINSKI M ET AL: "NONCONTACT VIBRATION MEASUREMENTS ON COMPRESSOR ROTOR BLADES" MEASUREMENT SCIENCE AND TECHNOLOGY, IOP, BRISTOL, GB, Bd. 11, Nr. 7, Juli 2000 (2000-07), Seiten 847-856, XP001100401 ISSN: 0957-0233**

**Beschreibung**

Die vorliegende Erfindung betrifft eine Vorrichtung und ein Verfahren zum Bestimmen von Drehmomenten an einer Turbinenwelle gemäß dem Oberbegriff des Patentanspruchs 1 und dem Oberbegriff des Patentanspruchs 11.

Turbinen werden beispielsweise in Flugzeugtriebwerken und als Industriegasturbinen eingesetzt. Beim Einsatz von Turbinen ist deren Wirkungsgrad eine wesentliche Kenngröße und wird daher während der Entwicklung von Geräten, in denen die Turbine eingesetzt werden soll, mit hohem Aufwand unter Betriebsbedingungen ermittelt. Hierzu werden primär die radial und über den Umfang gemittelten Temperaturen und Drücke am Turbineneintritt und Turbinenaustritt gemessen. Über ein Gesamtmodell des Triebwerks oder der Gasturbine wird hieraus und aus weiteren Messgrößen auf den Wirkungsgrad geschlossen. Inhomogenitäten im Temperatur- und Druckfeld und weitere zum Teil schwer einschätzbare Effekte führen dabei zu Unsicherheiten von typischerweise +/- 2% und mehr. Die von der Turbine über die Welle an den Verdichter abgegebene Leistung, die über das an der Welle anliegende Drehmoment gemessen werden kann, stellt eine zusätzliche unabhängige Grö-ße dar, mit der sich die Wirkungsgradbestimmung verbessern lässt.

Um die Wirkungsgradbestimmung wesentlich zu verbessern, muss das Drehmoment mit einer Genauigkeit von +/-0,5% oder besser bestimmt werden. Die Messung sollte möglichst keine oder nur geringe Modifikationen an der Welle und am Triebwerk beziehungsweise der Gasturbine erfordern und insgesamt schnell und kostengünstig durchführbar sein.

Zur Bestimmung von Drehmomenten an Wellen wird üblicherweise entweder der Torsionswinkel über ein endliches Stück der Welle oder lokal die Torsionsdehnung an der Wellenoberfläche gemessen. In beiden Fällen hängt das Drehmoment mit der Messgröße über das Schubmodul und die Geometrie der Welle zusammen.

So offenbart EP 1 398 608 A2 eine Vorrichtung und ein Verfahren zur Bestimmung des Drehmoments mit einer Anordnung zur berührungslosen Messung der integralen Verdrehung der Welle. Die zur Berechnung des Drehmoments ebenfalls notwendige Rückstellkonstante der Welle wird durch einen Modellansatz über FE-Berechnungen aus der Geometrie der Welle selbst gewonnen.

Auch US 4,811,238 zeigt ein Verfahren zur berührungslosen Bestimmung der Verdrehung der Welle und der Berechnung eines Torsionsschwingungssignals.

Zudem offenbart Zielinski et al: "Noncontact vibration measurements on compressor rotor blades" Measurement Science and Technology, 11 (2000) 847 - 856, wie Schwingungen von Schaufeln berührungslos gemessen werden können.

Zur Messung des Torsionswinkels werden im Stand der Technik unterschiedliche Verfahren beschrieben. Im einfachsten Fall werden an den beiden Enden der Welle Zahnkränze angebracht, die in nicht mitrotierenden optischen oder elektrischen (z.B. induktiven) Sensoren Wechselsignale hervorrufen, deren relative Phasenlage sich bei Torsion der Welle verändert.

Torsionsdehnungen werden meist mit Dehnmessstreifen oder mit magnetostriktiven Metallfolien gemessen, wobei letztere unter Dehnung ihre magnetischen Eigenschaften ändern, was von außen berührungslos mit induktiven Sensoren gemessen werden kann.

Diese Arten der Messungen sind allerdings äußerst aufwendig und meist nicht genau genug.

Insbesondere sind beim Einsatz dieser Verfahren unter Betriebsbedingungen eine Reihe von Aspekten beziehungsweise Problemen zu berücksichtigen. Zum einen streut das Schubmodul der Welle von Welle zu Welle bis zu einigen Prozent. Weiterhin ist das Schubmodul temperaturabhängig, typischerweise erfolgt eine Änderung mit 0,025%/°C. Dies ist besonders nachteilig für die Messverfahren, da die Welle beispielsweise im Betriebsbereich eines Triebwerks ihre Temperatur um einige hundert Grad ändert. Eine Berücksichtigung dieser Temperaturänderung ist jedoch nur schwer möglich, da die Temperaturverteilung längs der Welle komplex ist. Weiterhin weitet sich die Welle bei hohen Drehzahlen durch die Fliehkraft und wird dadurch steifer. Darüber hinaus ist die Torsion der Welle im Volllastpunkt relativ klein und beträgt in der Regel lediglich wenige Winkelgrade. Die Welle kann im Betrieb komplexe radiale Bewegungen ausführen und ihre axiale Position relativ zum Triebwerksgehäuse verändern. Hinzu kommt, dass sich die Schaufeln des Verdichters und der Turbine unter Last axial und in Umfangsrichtung verbiegen. Auch das Triebwerksgehäuse und das Gehäuse einer Gasturbine unterliegen Änderungen während des Betriebs. So kann sich das Gehäuse durch thermische und mechanische Lasten verbiegen und verdrehen. Schließlich ist es bei der Verwendung von Dehnmessstreifen nachteilig, dass diese bei Temperaturen über 200°C genaue statische Messungen kaum ermöglichen, da sowohl die Dehnmessstreifen als auch der Kleber zu kriechen beginnen.

Somit sind aufgrund dieser Randbedingungen von Triebwerken und Gasturbinen genaue Drehmomentmessungen im Triebwerk oder an Gasturbinen mit den Standardverfahren äußerst schwierig und sehr aufwendig.

Bei Messungen der lokalen Torsion müssen mehrere Dehnmessstreifen aufgebracht werden, um Torsionsdehnungen von auftretenden Biegedehnungen trennen zu können. Weiterhin sind auf der Welle Thermoelemente zur genauen Temperaturmessung erforderlich. Zur Versorgung der Sensoren und zur Signalübertragung wird eine Telemetrie benötigt. Vor den Messungen müssen die Sensorik und die Welle kalibriert werden, d.h. in einer Kalibriervorrichtung müssen definiert Drehmomente und Temperaturen aufgebracht werden.

Bei Messungen des Torsionswinkels liegen die Hauptschwierigkeiten in den Verformungen des Triebwerkgehäuses beziehungsweise des Gehäuses einer Gasturbine, an dem die Sensoren letztlich befestigt sind, und in den Temperaturverteilungen in der Welle, die bei der Kalibrierung nur schwer mit entsprechender Genauigkeit aufgeprägt werden können.

Aufgabe der vorliegenden Erfindung ist es daher, eine genaue und kostengünstige Messung des an der Turbinenwelle von Turbinentriebwerken oder Gasturbinen, insbesondere Industriegasturbinen, im Betrieb anliegenden Drehmoments bereitstellen zu können.

Der Erfindung liegt die Erkenntnis zugrunde, dass diese Aufgabe optimal durch gesonderte Messung der mit dem Drehmoment in Zusammenhang stehenden Größen gelöst werden kann. Weiterhin liegt der Erfindung die Erkenntnis zugrunde, dass die bei der Wellentorsionsschwingung wirkenden Rückstellkräfte denen bei anliegenden Drehmomenten während des Betriebs der Gasturbine beziehungsweise während des Triebwerkbetriebs entsprechen.

Die Aufgabe wird gelöst durch eine Vorrichtung zum Bestimmen des Drehmoments, das an einer Turbinenwelle anliegt, mit einer Anordnung zur berührungslosen Messung der integralen Verdrehung der Turbinenwelle und einer Einheit zur Bestimmung der Rückstellkonstanten der Turbinenwelle mit einer Messeinrichtung zum berührungslosen Messen der Frequenz der Torsionsschwingung der Turbinenwelle.

Mit einer solchen Vorrichtung können die Größen, die zur Ermittlung des Drehmoments notwendig sind, gesondert und genau bestimmt werden. Das Drehmoment, das sich über die Formel:

$$D = k * \varphi$$

Mit D: Drehmoment
k: Rückstellkonstante
$\varphi$: integrale Verdrehung

definiert, kann somit genau bestimmt werden. Dieses Ergebnis kann verwendet werden, um beispielsweise den Turbinenwirkungsgrad unter Triebwerksbedingungen genau bestimmen zu können.

Die Einheit zur Messung der Rückstellkonstanten umfasst eine Messeinrichtung zum berührungslosen Messen der Frequenz der Torsionsschwingung der Turbinenwelle. Da die bei der Wellentorsionsschwingung, das heißt der Grundschwingung, wirkenden Rückstellkräfte denen beim Anliegen eines Drehmomentes entsprechen, kann die Messung der Frequenz der Torsionsschwingung der Welle zur Bestimmung der Rückstellkonstante für das anliegende Drehmoment verwendet werden. Die Abhängigkeit der Frequenz von der Rückstellkonstante ergibt sich aus:

$$f = \frac{1}{2\pi} \sqrt{\frac{k}{\Theta}}$$

mit:

f: Torsionsfrequenz
k: Rückstellkonstante
$\Theta$: Trägheitsmoment

Die Messanordnung zur Bestimmung der integralen Verdrehung der Turbinenwelle ist vorzugsweise zumindest teilweise innerhalb der Welle angeordnet, wodurch sich einige der bezüglich des Stands der Technik genannten Nachteile vermeiden lassen. Die Messanordnung kann hierzu mindestens zwei Ausrichtungselemente umfassen, wobei mindestens eines der Ausrichtungselemente im Inneren der Welle angeordnet ist. Durch diese Art der Messung können einige der Nachteile, die bei Verfahren des Stands der Technik zur Bestimmung des Torsionswinkels auftreten, vermieden werden. Insbesondere beeinflusst die Verformung des Triebwerksgehäuses oder des Gasturbinen-Gehäuses, die im Betrieb auftritt, bei dieser Art der Messung das Messergebnis nicht. Somit kann die Genauigkeit des Messergebnisses erhöht werden.

Als Ausrichtungselemente werden im Sinne dieser Erfindung Elemente bezeichnet, deren gegenseitige Ausrichtung überprüft, insbesondere optisch erfasst werden kann. Zu diesem Zweck ist die Welle so auszulegen, dass deren Innenraum von der Vorderseite, bei einer Niederdruckturbinenwelle beispielsweise von dem Nasenkonus, bis in den Bereich der Turbine von au-ßen zumindest für optische Strahlen zugänglich ist. Neben der hohlen Auslegung der Turbinenwelle ist daher beispielsweise in den Nasenkonus eines Triebwerks eine Öffnung einzubringen.

Als Ausrichtungselemente können beispielsweise optische Elemente, wie Scheiben oder Ringscheiben verwendet werden, auf denen zumindest teilweise ein Muster aufgebracht beziehungsweise in diese eingebracht ist. Als Muster können beispielsweise Linien oder Gitter verwendet werden. Weiterhin können Ausrichtungselemente verwendet werden, die selber das Muster, das für die Bestimmung der gegenseitigen Ausrichtung notwendig ist, darstellen. So können beispielsweise Gitterstrukturen verwendet werden. Weiterhin ist es auch möglich, rohrförmige Ausrichtungselemente zu verwenden, wobei diese koaxial zu der Welle im Inneren der Welle angeordnet werden. Diese Rohre werden dann beispielsweise an einer Seite im Bereich der Turbine im Inneren an der Welle befestigt, sind aber über deren restliche Länge nicht mit der Welle verbunden. Mittels eines solchen Rohres kann die Verdrehung im Bereich der Turbine bis zur Vorderseite, d.h. beispielsweise in den Bereich des Nasenkonus, gebracht werden. Trägt ein solches rohrförmiges Ausrichtungselement an dessen Stirnseite, die der Befestigungsseite abgewandt ist, ein Muster, so kann dieses von der Vorderseite des Triebwerks oder der Gasturbine aus gesehen werden und die aktuelle Position des Turbinenbereichs der Welle im vorderen Teil der Welle angezeigt werden.

Die Ausrichtungselemente müssen kein separates Bauteil darstellen, vielmehr kann als Ausrichtungselement auch eine an zumindest einer Stelle an der Welle vorgesehene Markierung, die von außen sichtbar ist, verwendet werden. Diese Markierungen können beispielsweise um die Öffnung in dem Nasenkonus des Triebwerks vorgesehen sein und dienen in dieser Position der Anzeige der Stellung des Verdichterbereichs der Welle.

Die Messanordnung kann vorzugsweise zwei Ausrichtungselemente umfassen, wobei beide Ausrichtungselemente im Inneren der Welle angeordnet sind.

Unter Anordnung im Inneren wird insbesondere eine Fixierung oder Befestigung zumindest eines Teils der Ausrichtungselemente verstanden. Sind beide Ausrichtungselemente im Inneren der Welle vorgesehen, so muss die Erkennbarkeit bzw. Erfassbarkeit des hinter dem ersten Ausrichtungselement im Verdichterbereich angeordneten zweiten Ausrichtungselements im Turbinenbereich gewährleistet werden können. Hierzu kann beispielsweise bei der Verwendung von Scheiben als Ausrichtungselemente die vordere Scheibe, die im Bereich des Verdichters vorgesehen ist, transparent ausgestaltet und in diesem Fall vorzugsweise mit einer Antireflexionsbeschichtung versehen sein oder eine Ringscheibe darstellen. Die hintere Scheibe, die im Bereich der Turbine angeordnet ist, ist vorzugsweise reflektierend ausgestaltet.

Das Ausrichtungselement, das im Bereich der Turbine im Inneren der Welle angeordnet ist, ist somit vorzugsweise zur Übermittlung eines Musters, das auf diesem getragen wird, zumindest in den Bereich des Verdichters und bis über den Nasenkonus hinaus ausgelegt. Bei der Verwendung von Scheiben als Ausrichtungselemente wird diese Übermittlung durch die genannte reflektierende Ausgestaltung der Scheibe im Bereich der Turbine erzielt, wodurch ein auf diese auftreffender Lichtstrahl umgelenkt werden kann. Bei der rohrförmigen Ausgestaltung des Ausrichtungselements erfolgt die Übermittlung durch die Länge des Rohres.

Die Messanordnung zur Messung der integralen Verdrehung der Welle umfasst vorzugsweise eine Bildaufnahmeeinrichtung, die zur Aufnahme einer Abbildung zumindest eines Teils der Ausrichtungselemente ausgelegt ist. Der Teil der Ausrichtungselemente, der abgebildet wird, ist insbesondere das Muster, das auf dem Ausrichtungselement getragen wird. Bei Ausführungsformen, bei denen die Ausrichtungselemente selber das Muster darstellen, wird das gesamte Ausrichtungselement aufgenommen. Als Bildaufnahmevorrichtung kann eine Kamera verwendet werden, die vor dem Triebwerk, das heißt vor dem Nasenkonus, angeordnet wird. In dieser Position kann die Kamera durch die Öffnung in dem Nasenkonus das mindestens eine in der Welle vorgesehene Ausrichtungselement erfassen und dieses abbilden. Insbesondere ist die Bildaufnahmeeinrichtung so ausgelegt, dass diese beide Ausrichtungselemente erfassen kann. Hierdurch kann durch die relative Position der Muster, die die Ausrichtungselemente tragen, die relative Verdrehung der beiden Bereiche (Verdichter/Turbine) der Welle bestimmt werden. Um Ausrichtungselemente, die an unterschiedlichen Bereichen in der Welle vorgesehen sind, und deren Muster somit auch an unterschiedlichen Stellen in der Welle vorliegen, erfassen zu können, wird als Objektiv für die Kamera vorzugsweise ein Objektiv mit hoher Tiefenschärfe verwendet, das eine scharfe Abbildung der Muster der beiden Ausrichtungselemente erlaubt. Alternativ kann ein Objektiv verwendet werden, das zwei unterschiedliche Brennweiten aufweist. Hierdurch kann das Objektiv gleichzeitig auf die Ausrichtungselemente in unterschiedlichen Tiefen in der Welle scharf gestellt werden und deren Muster können scharf abgebildet werden.

Um auch bei laufendem Triebwerk beziehungsweise bei laufender Gasturbine klare Abbildungen der Muster der Ausrichtungselemente erhalten zu können, wird vorzugsweise eine Kamera verwendet, mit der extrem kurze Öffnungszeiten möglich sind.

Die Bildaufnahmeeinrichtung ist erfindungsgemäß vorzugsweise mit einer Beleuchtungseinrichtung verbunden, die mit der Bildaufnahmevorrichtung synchronisierbar ist. Hierdurch kann eine zeitgleiche Beleuchtung und Abbildung eines Musters eines beziehungsweise beider Ausrichtungselemente gewährleistet werden.

Als Beleuchtungseinrichtung kann eine Blitzlampe verwendet werden. Bei dieser Ausgestaltung kann bei Verwendung einer Kamera, mit der extrem kurze Öffnungszeiten möglich sind, die scharfe Abbildung der Muster der Ausrichtungselemente wahlweise durch kurze Beleuchtungsblitze und / oder durch kurze Öffnungszeiten erreicht werden. Die Beleuchtungseinrichtung ist vorzugsweise mit der Bildaufnahmeeinrichtung synchronisierbar und auf die Ausrichtungselemente fokussierbar. Besonders bevorzugt wird eine Blitzlampe mit einem kleinen Beleuchtungskopf verwendet, wobei hier Lichtleiter verwendet werden können. Zur gleichmäßigen Ausleuchtung von Ausrichtungselementen, die sich im Inneren der Welle befinden und sich in der Regel über deren gesamten Innendurchmesser erstrecken, kann der Beleuchtungskopf der Blitzlampe zentral auf der Kameraachse vorgesehen sein.

Vorzugsweise ist die Bildaufnahmeeinrichtung mit einer Bildverarbeitungseinheit verbunden. In dieser Einheit können die von den Ausrichtungselementen beziehungsweise von den darauf vorgesehenen Mustern aufgenommenen Abbildungen analysiert werden. Durch diese Analyse kann die relative Verdrehung der Muster zueinander bei laufendem Triebwerk im Vergleich zum stehenden oder langsam drehenden Triebwerk bestimmt werden.

Die Einheit zur Messung der Rückstellkonstanten kann insbesondere durch einen Reflexionssensor realisiert werden, über den von außerhalb des Triebwerks am Fan des Triebwerks die Schaufelwechselfrequenz gemessen wird. Aus der Modulation der Schaufelwechselfrequenz ergibt sich die Frequenz der Torsionsschwingung. Alternativ zu dieser Sensoranordnung kann ein Sensor im Triebwerkgehäuse über einer Verdichter- oder Turbinenrotorstufe angeordnet werden. Auch durch diese Messung kann die Frequenz der Wellentorsionsschwingung bestimmt werden.

Vorzugsweise umfasst die Einheit zur Messung der Rückstellkonstanten eine Einheit zur Berechnung des Trägheitsmomentes der Welle, des Verdichters und der Turbine. Alternativ können für das Trägheitsmoment experimentell ermittelte Werte verwendet werden.

Die erfindungsgemäße Vorrichtung kann beispielsweise für die Bestimmung des Drehmoments an einer Niederdruckturbinenwelle eines Flugzeugtriebwerks verwendet werden. Hierbei ist vorteilhaft, dass diese Welle für die optischen Messungen durch die erfindungsgemäße Vorrichtung von außen gut zugänglich ist.

Gemäß einem weiteren Aspekt der Erfindung betrifft diese ein Verfahren zur Bestimmung des Drehmoments, das an einer Turbinenwelle anliegt, wobei zur Bestimmung des Drehmoments die integrale Verdrehung der Turbinenwelle berührungslos gemessen wird und die Rückstellkonstante der Turbinenwelle bestimmt wird, wobei die Rückstellkonstante dadurch bestimmt wird, dass die Frequenz der Torsionsschwingung der Turbinenwelle berührungslos gemessen wird.

Bei einer Niederdruckturbinenwelle eines Triebwerkes kann dies insbesondere mittels eines Reflexionssensors von außerhalb des Triebwerks an dem Fan erfolgen. In einer Ausführungsform des Verfahrens umfasst dieses den Verfahrensschritt der rechnerischen Bestimmung des Trägheitsmoments der Turbinenwelle, des Verdichters und der Turbine. Hierbei werden die bekannten Geometrien, Werkstoffdichten und theoretische Temperaturverteilungen in der Welle berücksichtigt. Es ist erfindungsgemäß aber auch möglich, die Trägheitsmomente experimentell bei Raumtemperatur durch Wägung und Pendelversuche zu bestimmen. Zusatzinformationen zu den Verfahren zur Bestimmung der Trägheitsmomente können durch Messung der Amplitude der Wellentorsionsschwingung am Verdichter und an der Turbine bzw. Messung des Verhältnisses der beiden Amplituden erhalten werden.

Das erfindungsgemäße Verfahren wird vorzugsweise mit der erfindungsgemä-ßen Vorrichtung ausgeführt. Die Merkmale und Vorteile, die bezüglich der erfindungsgemäßen Vorrichtung beschrieben werden, gelten, soweit anwendbar, entsprechend für das erfindungsgemäße Verfahren und umgekehrt.

Die Erfindung wird im Folgenden anhand der beiliegenden Zeichnungen erneut beschrieben, wobei

Figur 1    eine schematische Schnittansicht einer Turbinenwelle mit einer Ausführungsform der erfindungsgemäßen Bestimmungsvorrichtung zeigt; und

Figur 2    eine schematische Schnittansicht einer Turbinenwelle mit einer weiteren Ausführungsform der erfindungsgemäßen Bestimmungsvorrichtung zeigt

Im Folgenden wird die Erfindung im Wesentlichen unter Bezugnahme auf eine Niederdruckturbinenwelle eines Flugzeugtriebwerks beschrieben. Es ist für den Fachmann jedoch offensichtlich, dass die Erfindung auch für andere Turbinenwellen in einem Flugtriebwerk oder in einer Gasturbine verwendet werden kann.

In den Figuren sind nur die für das Verständnis wesentlichen Teile der erfindungsgemäßen Vorrichtung und des Triebwerks angedeutet. Die Figuren sind darüber hinaus nicht maßstabsgetreu.

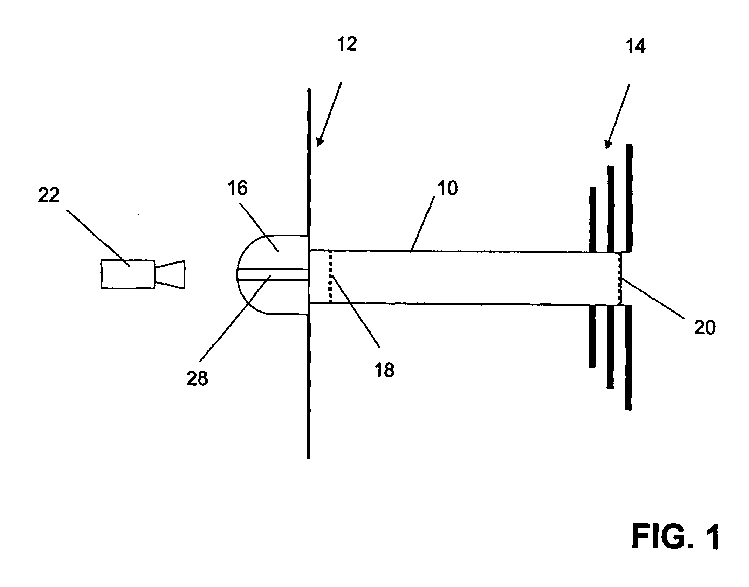

In der Figur 1 ist eine Niederdruckturbinenwelle 10 mit Verdichter 12 und Turbine 14 schematisch dargestellt. Der Verdichter 12 ist hierbei nur durch einen Fan angedeutet. Am vorderen Ende der Niederdruckturbinenwelle 10 ist der die Fan-Schaufeln tragende Nasenkonus 16 gezeigt.

Von der erfindungsgemäßen Bestimmungsvorrichtung sind in der Figur 1 lediglich die Ausrichtungselemente 18 und 20, sowie die Bildaufnahmeeinrichtung 22 angedeutet. Die Ausrichtungselemente 18, 20 sind in dieser Ausführungsform durch Scheiben gebildet, die jeweils eine Linienstruktur tragen. Die im Bereich des Verdichters 12 angeordnete Scheibe 18 ist hierbei transparent ausgestaltet und die im Bereich der Turbine 14 angeordnete Scheibe 20 ist reflektierend.

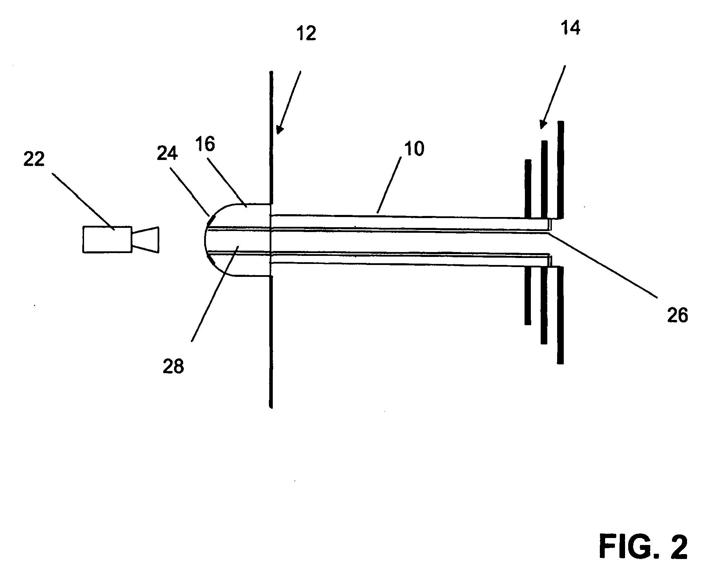

In der in Figur 2 gezeigten Ausführungsform sind ebenfalls nur die Ausrichtungselemente 24 und 26 sowie die Bildaufnahmevorrichtung 22 angedeutet. In dieser Ausführungsform wird das erste Ausrichtungselement 24 durch Markierungen auf dem Nasenkonus 16 um die darin vorgesehene Öffnung 28 herum gebildet, und das zweite Ausrichtungselement 26 stellt ein Rohr dar, das lediglich im Bereich der Turbine 14 mit der Welle 10 verbunden ist und sich von der Turbine 14 im Inneren der Welle 10 bis zu der Vorderseite des Nasenkonus 16 erstreckt.

Die Wirkungsweise der erfindungsgemäßen Bestimmungsvorrichtung und das erfindungsgemäße Verfahren werden nun unter Bezugnahme auf diese Figuren beschrieben.

Mit der erfindungsgemäßen Bestimmungsvorrichtung kann das Schubmodul der Welle 10 beziehungsweise genauer die wirksame Rückstellkonstante der Welle 10 zwischen Turbine 14 und Verdichter 12 unter Triebwerksbedingungen durch Messung der Wellentorsionsschwingung bestimmt werden. Die Frequenz dieser Schwingung hängt von der gesuchten Rückstellkonstante und von den Trägheitsmomenten des Verdichters 12, der Turbine 14 und der Welle 10 ab. Die Trägheitsmomente ihrerseits hängen über Fliehkraft und thermische Ausdehnung von der Drehzahl und Temperaturverteilung im Betriebspunkt des Triebwerks ab und können aus den bekannten Geometrien, Werkstoffdichten und theoretischen Temperaturverteilungen genau berechnet werden. Die Frequenz der Wellentorsionsschwingung ergibt sich aus der Modulation der Schaufelwechselfrequenz, die mit einem Reflexionssensor berührungslos an den Fan-Schaufeln des Verdichters 12 gemessen wird.

Die Messung der integralen Verdrehung der Welle 10 erfolgt in der in Figur 1 dargestellten Ausführungsform, in der im Bereich des Verdichters 12 eine durchsichtige Scheibe 18 und im Bereich der Turbine 14 eine Licht reflektierende Scheibe 20 eingebaut ist, über diese Anordnung. Beide Ausrichtungselemente 18, 20 tragen hierzu eine Linienstruktur. Mit der Kamera 22, die vor dem Triebwerk angeordnet ist, werden durch die Öffnung 28 im Nasenkonus 16 des Triebwerks Bilder aufgenommen, die gleichzeitig die Linienstruktur der vorderen und der hinteren Scheibe 18, 20 enthalten. Die Beleuchtung erfolgt dabei mit einer Blitzlampe mit kurzen Lichtblitzen, so dass die Bilder auch bei laufendem Triebwerk scharf sind.

Bei der in Figur 2 dargestellten Ausführungsform werden von der Kamera 22 Bilder aufgenommen, die gleichzeitig eine um die Öffnung 28 in dem Nasenkonus 16 vorgesehene Markierung 24, beispielsweise Linien, und die auf der Stirnseite des Rohres 26, das als Ausrichtungselement dient, vorgesehenen Markierungen, insbesondere Linien, aufnimmt. Auch hierbei erfolgt die Beleuchtung im Stroboskoplicht, das heißt mit kurzen Lichtblitzen, um scharfe Bilder erzeugen zu können.

Die Muster beziehungsweise Linien an den beiden Ausrichtungselementen 18, 20 bzw. 24, 26 werden so gewählt, dass in dem von der Kamera 22 aufgenommenen Bild klar erkennbare Strukturen wiedergegeben werden. Beispielsweise wird eine Vielzahl dünner Linien verwendet.

Durch entsprechende Bildanalyse lässt sich die relative Verdrehung der beiden Linienstrukturen zueinander im Vergleich zum stehenden oder langsam drehenden Triebwerk bestimmen. Durch Aufnahme vieler Bilder und Mittelung der Einzelergebnisse wird trotz der Bewegung des Triebwerks und der Welle eine hohe Genauigkeit erreicht. Das Muster, das auf den Ausrichtungselementen vorgesehen ist, wird so gewählt, dass trotz Beugungseffekten und einer endlichen Pixelzahl bei der Bildverarbeitung durch die Bildanalyse noch eine hohe Genauigkeit erzielt werden kann.

Die Ausrichtungselemente müssen nicht permanent mit der Welle verbunden sein. Vielmehr können diese auch Körper darstellen, die mit einem Werkzeug von vorne in die Welle eingeführt werden können, in der richtigen Position verspannt und nach der Messung wieder ausgebaut werden können. Hierdurch wird es möglich, auch bei Abnahmeläufen von Serientriebwerken die integrale Verdrehung zu messen, die wirksame Rückstellkonstante und die Drehmomente und dadurch den Wirkungsgrad der Turbine genauer bestimmen zu können.

Das erfindungsgemäße Messverfahren weist insbesondere den Vorteil auf, dass es keine separate Kalibrierung der Welle und Sensorik benötigt. Es sind lediglich geringfügige Maßnahmen an der Welle erforderlich. Ansonsten erfolgt die Messung des an der Welle anliegenden Drehmoments berührungslos von außerhalb des Triebwerks mit hoher Genauigkeit. Voraussetzung ist, dass die Welle hohl ist und von vorne bis in den Bereich der Turbine optisch zugänglich gemacht werden kann. Das Verfahren ist somit genau, kostengünstig und schnell anwendbar.

**Patentansprüche**

1. Vorrichtung zum Bestimmen des Drehmoment, das an einer Turbinenwelle (10) anliegt, mit einer Anordnung zur berührungslosen Messung der integralen Verdrehung der Turbinenwelle (10), **dadurch gekennzeichnet, dass** die Bestimmungsvorrichtung eine Einheit zur Bestimmung der Rückstellkonstanten der Turbinenwelle (10) mit einer Messeinrichtung zum berührungslosen Messen der Frequenz der Torsionsschwingung der Turbinenwelle aufweist.

2. Vorrichtung nach Anspruch 1, **dadurch gekennzeichnet, dass** die Messanordnung mindestens zwei Ausrichtungselemente (18, 20, 24, 26) umfasst, wobei mindestens eines der Ausrichtungselemente (18, 20, 26) im Inneren der Welle (10) angeordnet ist.

3. Vorrichtung nach Anspruch 1 oder 2, **dadurch gekennzeichnet, dass** die Messanordnung zwei Ausrichtungselemente (18, 20) umfasst und beide Ausrichtungselemente (18, 20) im Inneren der Welle (10) angeordnet sind.

4. Vorrichtung nach einem der Ansprüche 2 oder 3, **dadurch gekennzeichnet, dass** die Ausrichtungselemente (18, 20, 24, 26) ein Muster tragen oder die Form eines Musters aufweisen.

5. Vorrichtung nach einem der Ansprüche 2 bis 4, **dadurch gekennzeichnet, dass** eines der Ausrichtungselemente (20, 26) im Bereich der Turbine (14) im Inneren der Welle (10) angeordnet ist und zur Übermittlung eines Musters, das auf diesem vorgesehen ist, zumindest in den Bereich des Verdichters (12) ausgelegt ist.

6. Vorrichtung nach einem der Ansprüche 2 bis 5, **dadurch gekennzeichnet, dass** die Ausrichtungselemente (18, 20) optische Elemente darstellen.

7. Vorrichtung nach einem der Ansprüche 1 bis 6, **da-**

**durch gekennzeichnet, dass** die Messanordnung zur Messung der integralen Verdrehung der Welle (10) eine Bildaufnahmeeinrichtung (22) umfasst, die zur Aufnahme einer Abbildung zumindest eines Teils der Ausrichtungselemente (18, 20, 24, 26) ausgelegt ist.

8. Vorrichtung nach Anspruch 7, **dadurch gekennzeichnet, dass** diese eine mit der Bildaufnahmeeinrichtung (22) verbundene Bildverarbeitungseinheit aufweist.

9. Vorrichtung nach einem der Ansprüche 1 bis 8, **dadurch gekennzeichnet, dass** die Messeinheit zur Messung der Rückstellkonstanten eine Einheit zur rechnerischen Bestimmung des Trägheitsmomentes der Welle (10), des Verdichters (12) und der Turbine (14) umfasst.

10. Verfahren zur Bestimmung des Drehmoments, das an einer Turbinenwelle (10) anliegt, wobei zur Bestimmung des Drehmomentes die integrale Verdrehung der Turbinenwelle berührungslos gemessen wird und die Rückstellkonstante der Turbinenwelle bestimmt wird, **dadurch gekennzeichnet, dass** die Rückstellkonstante **dadurch** bestimmt wird, dass die Frequenz der Torsionsschwingung der Turbinenwelle berührungslos gemessen wird.

11. Verfahren nach Anspruch 10, **dadurch gekennzeichnet, dass** die Frequenz der Torsionsschwingung der Welle mittels eines Reflexionssensors gemessen wird.

12. Verfahren nach einem der Ansprüche 10 bis 11, **dadurch gekennzeichnet, dass** dieses den Verfahrensschritt der rechnerischen Bestimmung des Trägheitsmoments der Turbinenwelle (10), des Verdichters (12) und der Turbine (14) umfasst.

13. Verfahren nach einem der Ansprüche 10 bis 12, **dadurch gekennzeichnet, dass** dieses mit einer Vorrichtung gemäß einem der Ansprüche 1 bis 9 ausgeführt wird.


**Claims**

1. Apparatus for determining the torque applied to a turbine shaft (10), having an arrangement for contactless measurement of the integral torsion of the turbine shaft (10), **characterised in that** the determining apparatus has a unit for determining the restoration constant of the turbine shaft (10) with a measuring device for the contactless measurement of the frequency of the torsional oscillation of the turbine shaft.

2. Apparatus according to claim 1, **characterised in that** the measuring arrangement comprises at least two alignment elements (18, 20, 24, 26), with at least one of the alignment elements (18, 20, 26) being arranged in the interior of the shaft (10).

3. Apparatus according to claim 1 or 2, **characterised in that** the measuring arrangement comprises two alignment elements (18, 20), and both alignment elements (18, 20) are arranged in the interior of the shaft (10).

4. Apparatus according to one of claims 2 or 3, **characterised in that** the alignment elements (18, 20, 24, 26) bear a pattern or have the form of a pattern.

5. Apparatus according to one of claims 2 to 4, **characterised in that** one of the alignment elements (20, 26) is arranged in the region of the turbine (14) in the interior of the shaft (10) and is designed to convey a pattern, provided thereon, at least into the region of the compressor (12).

6. Apparatus according to one of claims 2 to 5, **characterised in that** the alignment elements (18, 20) represent optical elements.

7. Apparatus according to one of claims 1 to 6, **characterised in that** the measuring arrangement for measuring the integral torsion of the shaft (10) comprises an image-recording device (22) which is designed to record an image of at least one portion of the alignment elements (18, 20, 24, 26).

8. Apparatus according to claim 7, **characterised in that** it has an image-processing unit that is connected to the image-recording device (22).

9. Apparatus according to one of claims 1 to 8, **characterised in that** the measuring unit for measuring the restoration constant comprises a unit for computational determination of the moment of inertia of the shaft (10), of the compressor (12) and of the turbine (14).

10. Method for determining the torque applied to a turbine shaft (10), wherein in order to determine the torque the integral torsion of the turbine shaft is measured without contact and the restoration constant of the turbine shaft is determined, **characterised in that** the restoration constant is determined by measuring the frequency of the torsional oscillation of the turbine shaft without contact.

11. Method according to claim 10, **characterised in that** the frequency of the torsional oscillation of the shaft is measured by means of a reflection sensor.

**12.** Method according to one of claims 10 to 11, **characterised in that** it includes the method step of computational determination of the moment of inertia of the turbine shaft (10), of the compressor (12) and of the turbine (14).

**13.** Method according to one of claims 10 to 12, **characterised in that** the method is carried out with an apparatus in accordance with one of claims 1 to 9.


**Revendications**

**1.** Dispositif pour déterminer le couple appliqué à un arbre de turbine (10) comprenant un montage pour la mesure sans contact de la torsion intégrale de l'arbre de turbine (10),
**caractérisé en ce que**
le dispositif de détermination comprend une unité pour déterminer la constante de rappel de l'arbre de turbine (10) avec une installation de mesure sans contact de la fréquence de l'oscillation de torsion de l'arbre de turbine.

**2.** Dispositif selon la revendication 1,
**caractérisé en ce que**
le montage de mesure comporte au moins deux éléments d'alignement (18, 20, 24, 26) dont au moins l'un des éléments (18, 20, 26) est à l'intérieur de l'arbre (10).

**3.** Dispositif selon la revendication 1 ou 2,
**caractérisé en ce que**
le dispositif de mesure comprend deux éléments d'alignement (18, 20) et ces deux éléments (18, 20) sont à l'intérieur de l'arbre (10).

**4.** Dispositif selon l'une des revendications 2 ou 3,
**caractérisé en ce que**
les éléments d'alignement (18, 20, 24, 26) portent un motif ou ont la forme d'un motif.

**5.** Dispositif selon l'une des revendications 2 à 4,
**caractérisé en ce que**
l'un des éléments d'alignement (26, 20) est prévu au niveau de la turbine (14) à l'intérieur de l'arbre (10) et est dessiné pour transmettre un motif dont il est muni, jusqu'au niveau du compresseur (12).

**6.** Dispositif selon l'une des revendications 2 à 5,
**caractérisé en ce que**
les éléments d'alignement (18, 20) sont des éléments optiques.

**7.** Dispositif selon l'une des revendications 1 à 6,
**caractérisé en ce que**
le montage de mesure de la torsion intégrale de l'arbre (10) comprend une installation de prise de vue (22) pour prendre l'image d'au moins une partie des éléments d'alignement (18, 20, 24, 26).

**8.** Dispositif selon la revendication 7,
**caractérisé en ce qu'**
il comporte une unité de traitement d'image reliée à l'installation de prise de vue (22).

**9.** Dispositif selon l'une des revendications 1 à 8,
**caractérisé en ce que**
l'unité de mesure des constantes de rappel comprend une unité pour déterminer par le calcul le moment d'inertie de l'arbre (10), du compresseur (12) et de la turbine (14).

**10.** Procédé de détermination du couple appliqué à un arbre de turbine (10) selon lequel pour déterminer le couple on mesure sans contact la torsion intégrale de l'arbre de turbine et on détermine la constante de rappel de l'arbre de turbine,
**caractérisé en ce qu'**
on détermine la constante de rappel en mesurant sans contact la fréquence de l'oscillation de torsion de l'arbre de turbine.

**11.** Procédé selon la revendication 10,
**caractérisé en ce qu'**
on mesure la fréquence de l'oscillation en torsion de l'arbre par un capteur de réflexion.

**12.** Procédé selon l'une des revendications 10 à 11,
**caractérisé en ce qu'**
il comprend l'étape de procédé consistant à une détermination par calcul du moment d'inertie de l'arbre de turbine (10), du compresseur (12) et de la turbine (14).

**13.** Procédé selon l'une des revendications 10 à 12,
**caractérisé en ce qu'**
il est exécuté par un dispositif selon l'une des revendications 1 à 9.

FIG. 1

**FIG. 2**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1398608 A2

- US 4811238 A

### In der Beschreibung aufgeführte Nicht-Patentliteratur

- **ZIELINSKI et al.** Noncontact vibration measurements on compressor rotor blades. *Measurement Science and Technology,* 2000, vol. 11, 847-856